# EUROPÄISCHE PATENTANMELDUNG

(11) **EP 4 458 745 A1**
(43) Veröffentlichungstag der Anmeldung: **06.11.2024**
(21) Anmeldenummer: 23171552.5
(22) Anmeldetag: 04.05.2023
(51) Int. Cl.: B65G 54/02

(54) **GRUPPIERVORRICHTUNG**

(71) Anmelder: SOMIC Verpackungsmaschinen GmbH & Co. KG, 83123 Amerang (DE)
(72) Erfinder: KÖGEL, Christoph, 83134 Prutting (DE); TRENTINI, Tobias, 83125 Eggstätt (DE)
(74) Vertreter: Weickmann & Weickmann PartmbB

(57) **Zusammenfassung**

Die Erfindung betrifft eine Gruppiervorrichtung (100) zum Gruppieren von Objekten (O), umfassend eine Magnetschwebe-Fördervorrichtung (102) mit einer Arbeitsfläche (104), einer Mehrzahl Movern (106) und einer Steuervorrichtung (108) zum Steuern der Bewegung der Mover (106), wenigstens eine Zuführeinrichtung (112, 114, 116, 118) zum Zuführen der Objekte (O) und Beladen wenigstens eines sich in einer Beladeposition (BP1, BP2, BP3, BP4) befindenden Movers (106), und wenigstens eine Übergabeeinrichtung (120), welche das wenigstens eine Objekt (O) in einem Entladebereich (EB) an eine nachgeordnete weitere Vorrichtung (122) übergibt. Erfindungsgemäß umfasst die Gruppiervorrichtung (100) eine Mehrzahl von Zuführeinrichtungen (112, 114, 116, 118), und werden die Mover (106) längs kreuzungsfreier Bewegungspfade (PF1, PF2, PF3, PF4) von den Beladepositionen (BP1, BP2, BP3, BP4) zu dem wenigstens einen Entladebereich (EB) bewegt.

## Beschreibung

Die Erfindung betrifft eine Gruppiervorrichtung zum Gruppieren von Objekten, umfassend eine in Magnetschwebetechnologie ausgebildete Fördervorrichtung mit einer von einer Mehrzahl von Statoren gebildeten Arbeitsfläche, einer Mehrzahl von auf der Arbeitsfläche bewegbaren Movern und einer Steuervorrichtung zum Steuern der Bewegung der Mover auf der Arbeitsfläche, wenigstens eine Zuführeinrichtung zum Zuführen der Objekte und Beladen wenigstens eines sich in einer Beladeposition der Zuführeinrichtung befindenden Movers mit wenigstens einem der Objekte, und wenigstens eine Übergabeeinrichtung zum Entladen des wenigstens einen Objekts von dem wenigstens einen sich in wenigstens einem Entladebereich der Gruppiervorrichtung befindenden Mover und Übergeben des wenigstens einen entladenen Objekts an eine der Gruppiervorrichtung nachgeordnete, nicht zur Gruppiervorrichtung gehörende, weitere Vorrichtung, wobei die Steuervorrichtung dazu ausgebildet und bestimmt ist, den wenigstens einen Mover längs eines Bewegungspfads aus der Beladeposition in den wenigstens einen Entladebereich zu bewegen.

Eine derartige Gruppiervorrichtung ist beispielsweise aus der US 2020/0 030 995 A1 bekannt, die auch ganz allgemein den Aufbau und die Funktion einer in Magnetschwebetechnologie ausgebildeten Fördervorrichtung beschreibt.

Ausgehend von diesem Stand der Technik ist es Aufgabe der vorliegenden Erfindung eine variabler einsetzbare Gruppiervorrichtung bereitzustellen.

Diese Aufgabe wird erfindungsgemäß durch eine Gruppiervorrichtung der eingangs genannten Art gelöst, welche eine Mehrzahl von Zuführeinrichtungen umfasst, von denen jede eine gesonderte Beladeposition aufweist, und dass die Steuervorrichtung dazu ausgebildet und bestimmt ist, die Mover längs kreuzungsfreier Bewegungspfade von den Beladepositionen der Mehrzahl von Zuführeinrichtungen zu dem wenigstens einen Entladebereich der Gruppiervorrichtung zu bewegen.

Hierdurch ist es beispielsweise möglich, der Gruppiervorrichtung eine der Anzahl von Zuführeinrichtungen entsprechende Anzahl unterschiedlicher Arten von Objekten zuzuführen, so dass auch Gruppen mit gemischter Objektkonstellation zusammengestellt werden können. Darüber hinaus stellt die Kreuzungsfreiheit der Bewegungspfade (nachstehend auch "Gruppier-Bewegungspfade" genannt) sicher, dass auch dann, wenn es längs eines der Bewegungspfade zu Problemen kommen sollte, über die hiervon nicht betroffenen Bewegungspfade immer noch ein, wenn auch eingeschränkter, Betrieb der Gruppiervorrichtung aufrechterhalten werden kann.

Es sei darauf hingewiesen, dass der Begriff der Kreuzungsfreiheit im Zusammenhang mit der vorliegenden Erfindung gemäß eines engen Verständnisses ausgelegt wird. Insbesondere werden T- bzw. Y-förmige Abzweigungen (ein Bewegungspfad einlaufend, zwei Bewegungspfade auslaufend) bzw. Einmündungen (zwei Bewegungspfade einlaufend, ein Bewegungspfad auslaufend) nicht als "Kreuzungen" angesehen.

Erfindungsgemäß ist es zudem vorteilhaft, wenn nicht nur die Gruppier-Bewegungspfade kreuzungsfrei ausgebildet sind, sondern dass die Steuervorrichtung ferner dazu ausgebildet und bestimmt ist, die Mover längs kreuzungsfreier Bewegungspfade von dem wenigstens einen Entladebereich der Gruppiervorrichtung zu den Beladepositionen der Mehrzahl von Zuführeinrichtungen zu bewegen. Die letztgenannten Bewegungspfade werden im Zusammenhang mit der vorliegenden Erfindung nachstehend auch als "Rückführ-Bewegungspfade" bezeichnet werden.

Zur Erzielung der Kreuzungsfreiheit ist es vorteilhaft, wenn die Gruppier-Bewegungspfade vollständig innerhalb der Rückführ-Bewegungspfade verlaufen. Auf diese Weise können die Gruppier-Bewegungspfade und die Rückführ-Bewegungspfade in einfacher Weise vollständig voneinander entflochten werden, so dass nur noch innerhalb der jeweiligen Gruppe von Bewegungspfaden auf die erfindungsgemäße Kreuzungsfreiheit geachtet zu werden braucht.

Um die Entflechtung der Gruppier-Bewegungspfade und der Rückführ-Bewegungspfade erleichtern zu können, wird vorgeschlagen, dass die Beladeposition wenigstens einer Zuführeinrichtung, vorzugsweise die Beladepositionen einer Mehrzahl von Zuführeinrichtungen, noch bevorzugter die Beladepositionen aller Zuführeinrichtungen, vom Rand der Arbeitsfläche der in Magnetschwebetechnologie ausgebildeten Fördervorrichtung einen Abstand aufweisen, der größer ist als die Abmessungen eines Movers. Auf diese Weise können die Mover die Beladepositionen umfahren, indem sie sich unter den Enden der Zuführeinrichtungen hindurchbewegen. Letzteres ist aber auch unabhängig von der Entflechtung der Bewegungspfade von Vorteil.

Um die Objekte sicher mittels der Mover transportieren zu können, wird vorgeschlagen, dass auf wenigstens einem Mover, vorzugsweise auf einer Mehrzahl von Movern, noch bevorzugter auf allen Movern, eine Aufnahme zum Aufnehmen des wenigstens einen Objekts angebracht ist. Die Aufnahme kann beispielsweise eine Aufnahme sein, wie sie in der parallel anhängigen EP Nr. 23 153 080.9 der Anmelderin offenbart ist, die zum Zeitpunkt der Einreichung der vorliegenden Anmeldung noch nicht veröffentlicht worden ist.

Für den Fall, dass die Aufnahmen eine geringere als eine vier-zählige Drehsymmetrie aufweisen sollten, beispielsweise eine lediglich zwei-zählige Drehsymmetrie, also beispielsweise keinen quadratischen Grundriss aufweisen sollten, sondern einen rechteckigen Grundriss wie die in der EP Nr. 23 153 080.9 offenbarte Aufnahme, wird zur Ermöglichung beliebiger Anordnungen der gruppierten Objekte und/oder zur Anpassung an unterschiedliche Zuführrichtungen der Zuführeinrichtungen in Weiterbildung der Erfindung vorgeschlagen, dass jeder Gruppier-Bewegungspfad und/oder jeder Rückführ-Bewegungspfad wenigstens eine Drehposition aufweist. Zur Erhöhung der Durchsatzrate, d.h. der Anzahl der pro Zeiteinheit auf dem jeweiligen Bewegungspfad weiterbewegbaren Mover, kann wenigstens einer der Bewegungspfade eine Mehrzahl von Drehpositionen aufweisen. Vorteilhafterweise können die Mover an den Drehpositionen, vorzugsweise in beiden Drehrichtungen, zumindest um ganzzahlige Vielfache von 90° gedreht werden.

Um an den Beladepositionen einen schnellen Moverwechsel ermöglichen zu können, d.h. erreichen zu können, dass ein unbeladener Mover möglichst schnell in die Beladeposition bewegt werden kann, nachdem ein beladener Mover die jeweilige Beladeposition verlassen hat, wird vorgeschlagen, dass die Steuervorrichtung dazu ausgebildet und bestimmt ist, einen an einer Beladeposition beladenen und somit von der Beladeposition weg zu bewegenden Mover und einen unbeladenen, in die Beladeposition nachzurückenden Mover zumindest über eine Distanz, die gleich der Länge der Mover oder der Aufnahme ist, in der gleichen Richtung zu bewegen. Durch diese Maßnahme können beide Mover synchron bewegt werden. Dadurch befindet sich der nachrückende Mover zu dem Zeitpunkt, zu dem der abrückende beladene Mover die Beladeposition vollständig verlassen hat, bereits vollständig in der Beladeposition. Mit anderen Worten muss der nachrückende Mover mit dem Beginn der Bewegung in die Beladeposition nicht warten, bis der abrückende Mover die Beladeposition vollständig verlassen hat.

Ist die Aufnahme nicht nur für das eindimensionale Beladen der Aufnahme mit Objekten ausgebildet, d.h. nicht nur für das Übereinanderstapeln von Objekten, sondern auch für das zweidimensionale Beladen (Anordnung der Objekte übereinander und nebeneinander) und/oder das dreidimensionale Beladen (Anordnung der Objekte übereinander, nebeneinander und hintereinander), so kann es vorteilhaft sein, dass die Steuervorrichtung dazu ausgebildet und bestimmt ist, den nachrückenden Mover bereits während des Beladens des gerade zu beladenden Movers, vorzugsweise synchron zu diesem, mit diesem mitzubewegen. Auf diese Weise kann sichergestellt werden, dass nach dem vollständigen Beladen des fertig beladenen Movers keine Zeit verloren geht, um den nachrückenden Mover in die Beladeposition zu bewegen.

In Abhängigkeit von der Gestalt der Objekte kann es vorteilhaft sein, dass die Steuervorrichtung dazu ausgebildet und bestimmt ist, den gerade zu beladenden Mover in der Beladeposition um ein ganzzahligen Vielfaches von 90°, beispielsweise 180°, zu drehen. Dies kann beispielsweise das raumsparende Stapeln von keilförmigen Objekten, beispielsweise keilförmigen Käseblöcken, ermöglichen.

Um bereits beim Beladen der Aufnahmen Objekte unterschiedlichen Typs in der Aufnahme mischen zu können, wird vorgeschlagen, dass die Steuervorrichtung dazu ausgebildet und bestimmt ist, einen zu beladenden Mover von der einer ersten Zuführeinrichtung zugeordneten Beladeposition in eine einer zweiten Zuführeinrichtung zugeordnete Beladeposition zu bewegen.

Um auch in dem wenigstens einen Entladebereich eine schnellstmögliche Übergabe der Objekte an die der Gruppiervorrichtung nachgeordnete, nicht zur Gruppiervorrichtung gehörende, weitere Vorrichtung, beispielsweise Verpackungsvorrichtung, ermöglichen zu können, kann vorgesehen sein, dass die Steuervorrichtung dazu ausgebildet und bestimmt ist, den wenigstens einen zu entladenden Mover in der für die Entladung erforderlichen Orientierung in einen dem jeweiligen Entladebereich vorgeordneten Aufstellbereich zu bewegen. Sobald der vorhergehende Mover von der Übergabeeinrichtung entladen worden ist und den wenigstens einen Entladebereich verlassen hat, kann somit während der Zeitdauer der Übergabe des wenigstens einen Objekts an die weitere Vorrichtung der als nächstes zu entladende Mover, der bereits in dem dem wenigstens einen Entladebereich zugeordneten Aufstellbereich wartet, aus diesem Aufstellbereich in den Entladebereich bewegt werden.

Um einen reibungsloses und/oder verzögerungsfreies Ineinandergreifen von Be- und Entladen der Mover ermöglichen zu können, wird in Weiterbildung der Erfindung vorgeschlagen, dass wenigstens einer Zuführeinrichtung und/oder wenigstens einem Entladebereich ein Pufferbereich zur vorübergehenden Lagerung wenigstens zweier Mover vorgeordnet ist. Vorteilhafterweise kann dem bzw. jedem Pufferbereich eine Drehposition zugeordnet sein.

In Weiterbildung der Erfindung kann die Steuervorrichtung zusätzlich zu dem vorstehend erläuterten Betriebsmodus einen Betriebsvorbereitungsmodus aufweisen. Insbesondere kann die Steuervorrichtung dazu ausgebildet und bestimmt sein, sämtliche Mover in vordefinierte Ausgangspositionen zu bewegen. In diesen Ausgangspositionen kann die Steuervorrichtung dann den einzelnen Movern eine zumindest für den nächsten Betriebsmodus geltende Identifizierung zuweisen. Ausgehend von den Ausgangspositionen können die Mover dann erforderlichenfalls gedreht und gezielt in Betriebsbeginnpositionen bewegt werden, von denen aus dann der Betriebsmodus gestartet werden kann.

Vorzugsweise kann dabei vorgesehen sein, dass die Ausgangspositionen derart gewählt sind, dass die Mover einen Abstand voneinander aufweisen, der ein Drehen jedes der Mover, gegebenenfalls einschließlich der Aufnahme, ermöglicht.

Um Störungen beheben zu können, welche beispielsweise von der Fehlfunktion von Sensoren und/oder dem Verhaken wenigstens eines Objekts in einer der Aufnahmen hervorgerufen worden sein könnten, kann die Steuervorrichtung in Weiterbildung der Erfindung zusätzlich zu dem Betriebsmodus und ggf. dem Betriebsvorbereitungsmodus auch noch einen Entstörungsmodus aufweisen. Insbesondere kann die Steuervorrichtung dazu ausgebildet und bestimmt sein, wenigstens die beladenen Mover in vordefinierte Entstörpositionen zu bewegen. Vorteilhafterweise sind die Entstörpositionen derart gewählt, dass die sich in den Aufnahmen der beladenen Mover befindenden Objekte von einer Bedienungsperson in einfacher Weise entnommen werden können. Ob ein Mover beladen ist oder nicht, kann die Steuervorrichtung in diesem Zusammenhang beispielsweise auf Grundlage der Stromstärke ermittelt werden, die erforderlich ist, um den Mover in einem vorbestimmten Schwebezustand oberhalb der Arbeitsfläche der in Magnetschwebetechnologie ausgebildeten Fördervorrichtung zu halten.

Anschließend kann die Steuervorrichtung den weiteren Betrieb der Gruppiervorrichtung im Betriebsmodus durch Einsatz des Betriebsvorbereitungsmodus vorbereiten.

Die Erfindung wird im Folgenden mit Bezug auf die beigefügte Zeichnung anhand eines Ausführungsbeispiels näher erläutert werden. Es stellt dar:
- Figur 1: eine schematische Draufsicht auf eine erfindungsgemäße Gruppiervorrichtung zur Erläuterung des Betriebsmodus;
- Figuren 2a und 2b: zwei Ansichten ähnlich Figur 1 zur Erläuterung des Betriebsvorbereitungsmodus; und
- Figur 3: eine Ansicht ähnlich Figur 1 zur Erläuterung des Entstörmodus.

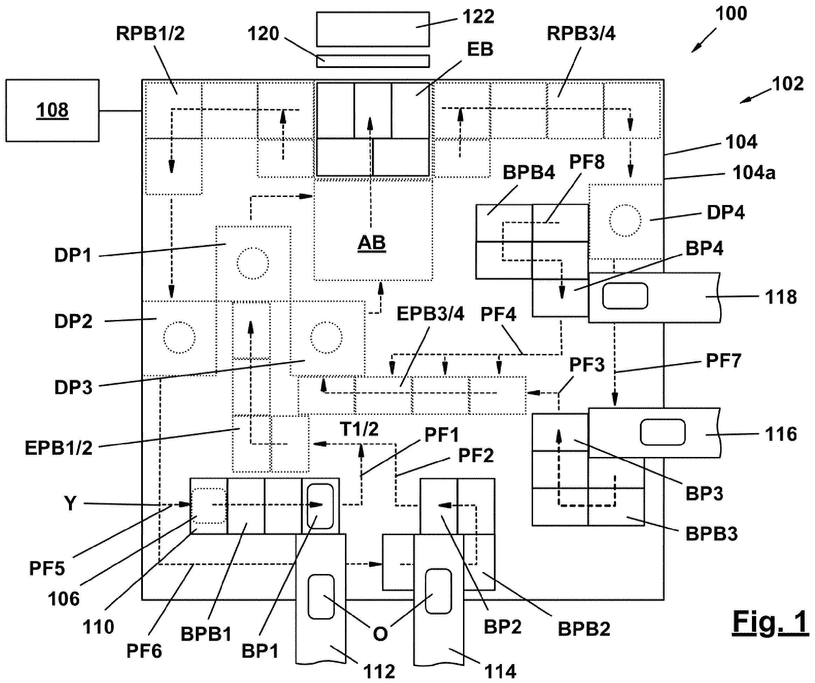

In Figur 1 ist eine erfindungsgemäße Gruppiervorrichtung ganz allgemein mit 100 bezeichnet.

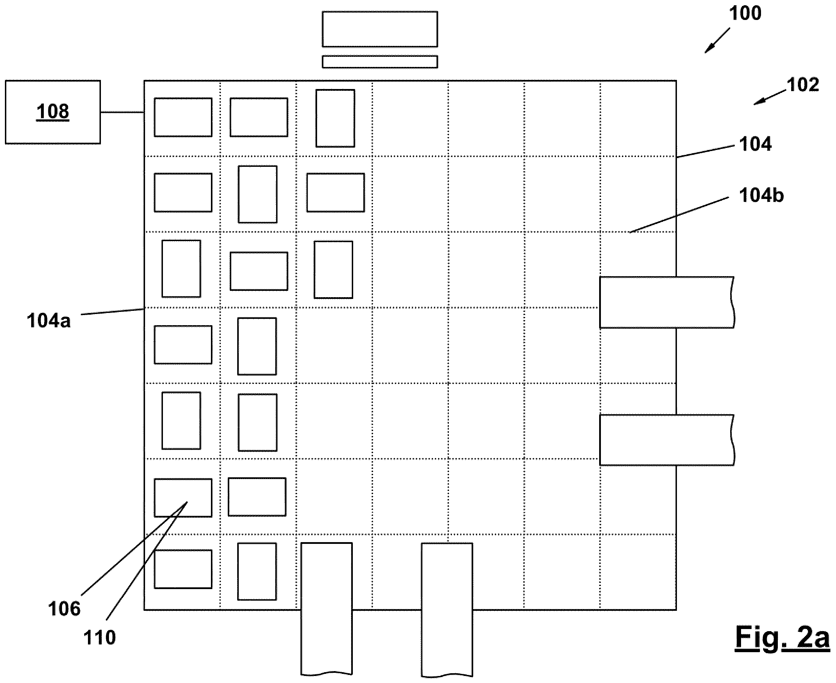

Die Gruppiervorrichtung 100 umfasst eine in Magnetschwebetechnologie ausgebildete Fördervorrichtung 102 mit einer Arbeitsfläche 104, einer Mehrzahl von auf der Arbeitsfläche 104 bewegbaren Movern 106 und einer Steuervorrichtung 108 zum Steuern der Bewegung der Mover 106 auf der Arbeitsfläche 104. Die Arbeitsfläche 104 kann beispielsweise aus einer Mehrzahl von in Figur 1 der Übersichtlichkeit halber nicht dargestellten Statoren 104b (siehe Figur 2a) zusammengesetzt sein. Jeder dieser Statoren kann eine Mehrzahl von elektromagnetischen Spulen umfassen, die von der Steuervorrichtung 108 angesteuert werden können, um die mit Permanentmagneten bestückten Mover 106 längs der Arbeitsfläche 104 bewegen zu können.

In Figur 1 ist der Übersichtlichkeit halber lediglich einer der Mover gepunktet dargestellt und mit dem Bezugszeichen 106 versehen. Ansonsten sind in Figur 1 nur die auf den Movern 106 befestigten und diese überragenden Aufnahmen 110 dargestellt, die zur Aufnahme der über die Zuführeinrichtungen 112, 114, 116, 118 zugeführten Objekte O dienen.

Die Objekte O werden an Beladepositionen BP1, BP2, BP3, BP4 von den Zuführeinrichtungen 112, 114, 116, 118 an die Mover 106 bzw. die auf diesen befestigten Aufnahmen 110 übergeben. Aus den Beladepositionen BP1, BP2, BP3, BP4 bewegen sich die Mover 106 längs (nachstehend noch eingehender zu erläuternden) Bewegungspfaden PF1, PF2, PF3, PF4 zu einem Entladebereich EB, in dem sie gemäß einer vorgegebenen Gruppierungskonstellation der Objekte O angeordnet sind. Im dargestellten Ausführungsbeispiel ist dies eine 3+2-Konstellation mit drei nebeneinander angeordneten, in Figur 1 in oben-unten-Richtung orientierten Movern 106 und zwei darunter quer, d.h. in rechts-links-Richtung, orientierten Movern 106. Im Entladebereich EB werden die Objekte O mittels einer Übergabeeinrichtung 120 von den Movern 106 bzw. aus deren Aufnahmen 110 entladen und in der Gruppierungskonstellation an einer weitere Vorrichtung 122, beispielsweise eine Verpackungsvorrichtung, übergeben.

Von dem Entladebereich EB werden die Mover 106 anschließend längs Bewegungspfaden PF5, PF6, PF7, PF8 wieder zu den Zuführeinrichtungen 112, 114, 116, 118 zurückbewegt.

Im Zusammenhang mit der vorliegenden Erfindung werden die Bewegungspfade PF1, PF2, PF3, PF4 als Gruppier-Bewegungspfade bezeichnet, während die Bewegungspfade PF5, PF6, PF7, PF8 gemeinsam als Rückführ-Bewegungspfade bezeichnet werden.

Nachstehend soll der Weg eines Movers 106 von der Beladeposition, beispielsweise der der Zuführeinrichtung 112 zugeordneten Beladeposition BP1, zum Entladebereich EB und von dort wieder zurück zur Zuführeinrichtung 112 näher erläutert werden. Diese Erläuterung lässt sich aber in analoger Weise auch auf die von den anderen Zuführeinrichtungen 114, 116, 118 ausgehenden Mover 106 übertragen.

Wie in Figur 1 dargestellt ist, befindet sich vor der Beladeposition BP1 ein Pufferbereich BPB1, in dem in der in Figur 1 dargestellten Momentaufnahme drei Mover 106 auf ihre Beladung durch die Zuführeinrichtung 112 warten. Der in Figur 1 rechteste dieser Mover 106 befindet sich in unmittelbarer Nachbarschaft zu dem Mover 106, der von der Zuführeinrichtung 112 gerade beladen wird. Sobald dieser Mover beladen ist, wird er unter der Steuerung der Steuervorrichtung 108 in Figur 1 nach rechts bewegt, so dass der gerade erwähnte auf seine Beladung wartende Mover 106 verzögerungsfrei nachrücken kann.

Sobald der beladene Mover 106 die Beladeposition BP1 verlassen hat, biegt er in Figur 1 dem Gruppier-Bewegungspfad PF1 folgend nach oben ab. An einer T-Einmündung T1/2 werden die Gruppier-Bewegungspfade PF1 und PF2 zusammengeführt. Da die Steuervorrichtung 108 die jeweiligen Momentanpositionen aller Mover 106 kennt, kann sie in einfacher Weise verhindern, dass es an der Einmündung T1/2 zu Zusammenstößen von Movern 106 kommt. Zudem dauert das Beladen der Mover 106 mit einer Mehrzahl von Objekten O eine gewisse Zeit, so dass das gleichzeitige Eintreffen von Movern 106 an der Einmündung T1/2 ohnehin nicht häufig vorkommt.

Anschließend wird der Mover 106 in einen Entladepufferbereich EPB1/2 bewegt, in dem er darauf wartet, im Entladebereich EB entladen zu werden. Da die von den Zuführeinrichtungen 112 und 114 kommenden Mover 106 alle die gleiche Orientierung aufweisen, weist jede Warteposition des Entladepufferbereichs EPB1/2 eine dieser Orientierung entsprechende Größe und Orientierung auf, so dass in jeder Warteposition genau ein Mover 106 mit der auf ihm befestigten Aufnahme 110 angeordnet sein kann.

Um den Mover 106 und damit dessen Aufnahme 110 drehen zu können, so dass auch die von den Zuführeinrichtungen 112 und 114 kommenden Mover 106 erforderlichenfalls eine der beiden Querpositionen der 3+2-Konstellation einnehmen können, ist am Ende des Entladepufferbereichs EPB1/2 eine Drehposition DP1 vorgesehen, in der die Mover 106 zumindest um ganzzahlige Vielfache von 90° gedreht werden können.

Zur Drehposition DP1 ist noch anzumerken, dass der für sie reservierte Teil der Arbeitsfläche 104 so groß bemessen ist, dass sichergestellt ist, dass ein an der Drehposition gedrehter Mover 106 mit seiner Aufnahme 110 beim Drehen mit keinem anderen Mover 106 bzw. dessen Aufnahme 110 kollidieren kann.

Ferner ist darauf hinzuweisen, dass der für die Drehposition DP1 reservierte Teil der Arbeitsfläche 104 genau gleich der Größe eines Stators 104b der Arbeitsfläche 104 ist. Anhand der Drehpositionen DP1, DP2, DP3, DP4 kann man daher abschätzen, wo die Statoren 104b in Figur 1 angeordnet sind. Ist die Diagonale der Auflage hingegen größer als die Länge eines Stators, so muss ein größerer Bereich reserviert werden.

Von der Drehposition DP1 wird der Mover 106 weiter in einen Aufstellbereich AB bewegt, und zwar an eine für ihn von der Steuervorrichtung 108 vorbestimmte Position der 3+2-Konstellation. Das Gleiche gilt auch für die von den Zuführeinrichtungen 116, 118 stammenden Mover 106 nach dem Durchlaufen der Drehposition DP3. Auf diese Wiese wird im Aufstellbereich AB eine vollständige 3+2-Konstellation von Movern 106 auf das Entladen im Entladebereich EB vorbereitet.

Sobald die Übergabeeinrichtung 120 die vorhergehende 3+2-Konstellation entladen und an die weitere Vorrichtung 122 übergeben hat, und der Entladebereich EB wieder leer ist, werden die im Aufstellbereich AB wartenden Mover 106 gemeinsam, d.h. synchron, in den Entladebereich EB bewegt. Sollte der Aufstellbereich AB noch nicht vollständig gefüllt sein, so werden die in ihm vorhanden Mover 106 gleichwohl bereits in den Entladebereich EP transferiert.

Nach dem Entladen werden die Mover 106 mit ihren nunmehr wieder leeren Aufnahmen 110 in Figur 1 nach links und rechts in Rückführpufferbereiche RPB1/2, RPB3/4 bewegt. Da offen ist, von welcher Position der 3+2-Konstellation ein jeweiliger Mover 106 in die Rückführpufferbereiche RPB1/2, RPB3/4 gelangt, sind die einzelnen Wartepositionen der Rückführpufferbereiche RPB1/2, RPB3/4 so groß bemessen, dass sichergestellt ist, dass die Mover 106 unabhängig von ihrer jeweiligen Orientierung darin vollständig aufgenommen werden können. Die Wartepositionen der Rückführpufferbereiche RPB1/2, RPB3/4 sind daher größer bemessen als jene der Entladepufferbereiche EPB1/2, EPB3/4.

Um gleichwohl sicherstellen zu können, dass die Mover 106 der jeweiligen Zuführeinrichtung 112, 114, 116, 118 in der für diese erforderlichen Orientierung zugeführt werden können, sind im Anschluss an die Rückführpufferbereiche RPB1/2, RPB3/4 weitere Drehpositionen DP2, DP4 vorgesehen.

Hinsichtlich der Anordnung und der Größe der Drehpositionen DP2, DP4 gilt das zu den Drehpositionen DP1, DP3 Gesagte in identischer Weise.

An einer Abzweigungsstelle Y werden die Mover 106 in einen zur Zuführeinrichtung 112 führenden Rückführ-Bewegungspfad PF5 und einen zur Zuführeinrichtung 114 führenden Rückführ-Bewegungspfad PF6 aufgeteilt. Bei den Zuführeinrichtungen 116, 118 übernimmt die Drehposition DP4 diese Funktion für die Rückführ-Bewegungspfad PF7, PF8.

An dieser Stelle sei nochmals ausdrücklich darauf hingewiesen, dass die Bewegungspfad-Paare PF1/PF2, PF3/PF4, PF5/PF6, PF7/PF8 jeweils zumindest längs eines Teils ihrer Länge gemeinsam verlaufen.

Wie man in Figur 1 erkennt, führen die Rückführ-Bewegungspfade PF6, PF7 unter den Zuführeinrichtungen 112, 118 hindurch. Um dies zu erzielen, weisen die Beladepositionen BP1, BP4 vom Rand 104a der Arbeitsfläche 104 einen Abstand auf, der ein kollisionsfreies Vorüberbewegen eines Movers 106 auf der äußersten Bewegungsbahn der Arbeitsfläche 104 ermöglicht. Zudem müssen die Zuführungen 112, 118 mindestens so hoch angeordnet sein, dass ein schwebender Mover 106 mit darauf befestigter Aufnahme 110 darunter hindurchfahren kann.

Durch die Anordnung der Rückführ-Bewegungspfade PF5, PF6, PF7, PF8 in den äußeren Bereichen der Arbeitsfläche 104 und der Gruppier-Bewegungspfade PF1, PF2, PF3, PF4 in den inneren Bereichen der Arbeitsfläche 104 sowie das Leiten der Rückführ-Bewegungspfade PF6, PF7 unter den Zuführeinrichtungen 112, 118 hindurch können die Bewegungsfade vollkommen kreuzungsfrei geführt werden. Zur Reduzierung der Größe der erforderlichen Arbeitsfläche 104 kommen lediglich T- bzw. Y-Einmündungen bzw. -Abzweigungen zum Einsatz.

Nachzutragen ist an dieser Stelle, dass auch den Zuführeinrichtungen 114, 116, 118 Beladepufferbereiche BPB2, BPB3, BPB4 zugeordnet sind.

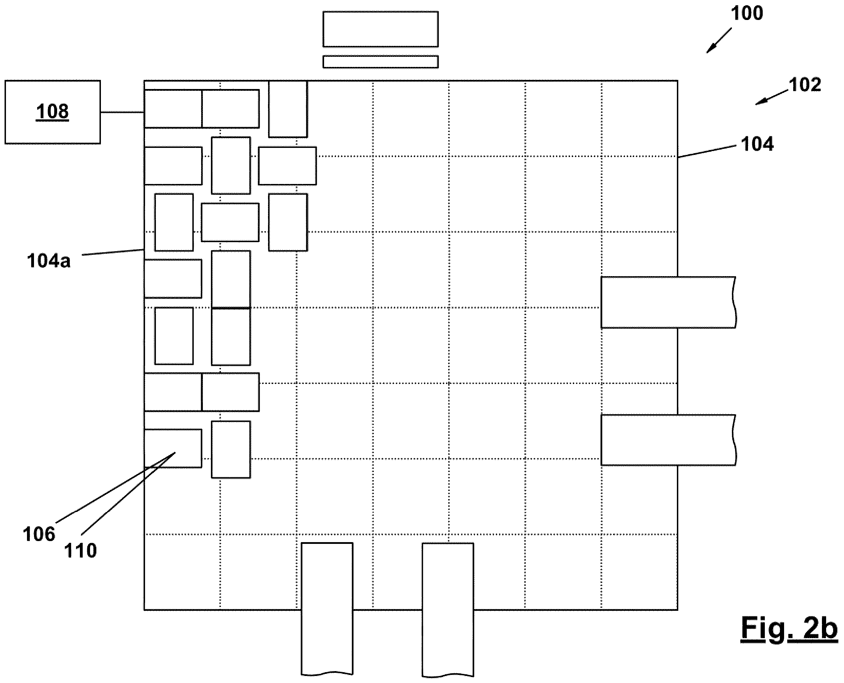

Um die Inbetriebnahme der erfindungsgemäßen Gruppiervorrichtung 100 erleichtern zu können, kann die Steuervorrichtung 108 erfindungsgemäß auf einen Betriebsvorbereitungsmodus zurückgreifen, der nachstehend mit Bezug auf die Figuren 2a und 2b erläutert werden soll.

Vorliegend wird davon ausgegangen, dass sich die Mover 106 nach Beendigung des letzten Betriebszyklus, beispielsweise am Abend des Vortags, an ihren jeweiligen letzten Positionen befinden. Da dieses Positionsbild von Tag zu Tag variieren kann, ist es das Ziel des Betriebsvorbereitungsmodus, die Mover 106 in vordefinierte Ausgangspositionen zu bringen, um den erneuten Start der Gruppiervorrichtung zu erleichtern.

Hierzu können die Mover in Abhängigkeit von ihrer jeweiligen Momentanposition an den Rand 104a der Arbeitsfläche 104 der Fördereinrichtung 102 bewegt und dort gemäß eines vorbestimmten Rastermusters angeordnet werden, beispielsweise des in Figur 2a dargestellten Rastermusters. In dieser Anordnung ist jeder Mover 106 in einem Bereich angeordnet, dessen Größe gleich der eines der (gepunktet angedeuteten) Statoren 104b der Arbeitsfläche 104 ist. Auf diese Weise kann sichergestellt werden, dass jeder der Mover 106 in die ihm von der Steuervorrichtung 108 zugedachte Orientierung gedreht werden kann, ohne mit anderen Movern 106 bzw. deren Aufnahmen 110 zu kollidieren.

Ausgehend von diesen Ausgangspositionen können die Mover 106 dann zunächst in der erforderlichen Orientierung ausgerichtet und anschließend in die ihnen jeweils zugedachte Betriebsbeginnposition gebracht werden, ausgehend von der dann der Betriebsmodus gestartet werden kann.

Nachzutragen ist noch, dass die Mover zunächst auch dichter zusammengefahren werden können, wie in Figur 2b dargestellt ist, bevor sie das vorbestimmte Rastermuster einnehmen.

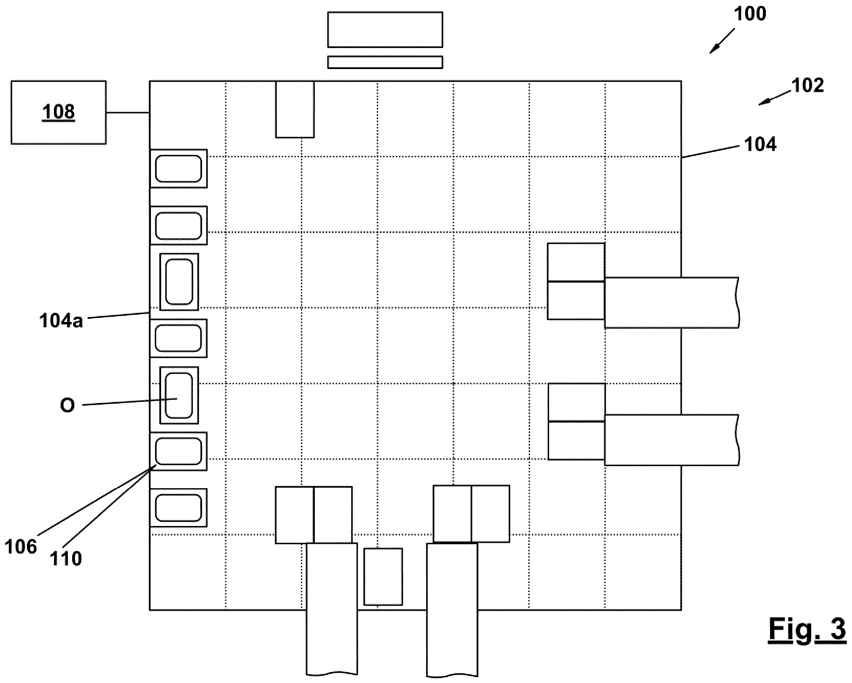

Mit Bezug auf Figur 3 wird nun noch ein Entstörmodus der Steuervorrichtung 108 erläutert werden. Sollte es, aufgrund welcher Umstände auch immer, zu einer Störung des Ablaufs des Betriebsmodus kommen, die eine Betriebsunterbrechung nach sich zieht, so müssen als erstes die Objekte O aus den mit Objekten O beladenen Movern 106 entnommen werden, bevor der Betrieb, beispielsweise unter Einsatz des Betriebsvorbereitungsmodus, wieder aufgenommen werden kann. Um der hierfür zuständigen Bedienungsperson das Entladen der Mover 106 zu erleichtern, sieht der Entstörmodus vor, alle beladenen Mover 106 an den Rand 104a der Arbeitsfläche 104 zu bewegen, da die Bedienungsperson hier am einfachsten auf sie zugreifen kann. Diese Anordnung der Mover 106 ist in Figur 3 dargestellt.

## Patentansprüche

1. Gruppiervorrichtung (100) zum Gruppieren von Objekten (O), umfassend
• eine in Magnetschwebetechnologie ausgebildete Fördervorrichtung (102) mit einer von einer Mehrzahl von Statoren (104b) gebildeten Arbeitsfläche (104), einer Mehrzahl von auf der Arbeitsfläche (104) bewegbaren Movern (106) und einer Steuervorrichtung (108) zum Steuern der Bewegung der Mover (106) auf der Arbeitsfläche (104),
• wenigstens eine Zuführeinrichtung (112, 114, 116, 118) zum Zuführen der Objekte (O) und Beladen wenigstens eines sich in einer Beladeposition (BP1, BP2, BP3, BP4) der Zuführeinrichtung (112, 114, 116, 118) befindenden Movers (106) mit wenigstens einem der Objekte (O), und
• wenigstens eine Übergabeeinrichtung (120) zum Entladen des wenigstens einen Objekts (O) von dem wenigstens einen sich in wenigstens einem Entladebereich (EB) der Gruppiervorrichtung (100) befindenden Mover (106) und Übergeben des wenigstens einen entladenen Objekts (O) an eine der Gruppiervorrichtung (100) nachgeordnete, nicht zur Gruppiervorrichtung (100) gehörende, weitere Vorrichtung (122),
wobei die Steuervorrichtung (108) dazu ausgebildet und bestimmt ist, den wenigstens einen Mover (106) längs eines Bewegungspfads (PF1, PF2, PF3, PF4) aus der Beladeposition (BP1, BP2, BP3, BP4) in den wenigstens einen Entladebereich (EB) zu bewegen,
**dadurch gekennzeichnet, dass** die Gruppiervorrichtung (100) eine Mehrzahl von Zuführeinrichtungen (112, 114, 116, 118) umfasst, von denen jede eine gesonderte Beladeposition (BP1, BP2, BP3, BP4) aufweist, und dass die Steuervorrichtung (108) dazu ausgebildet und bestimmt ist, die Mover (106) längs kreuzungsfreier Bewegungspfade (PF1, PF2, PF3, PF4) von den Beladepositionen (BP1, BP2, BP3, BP4) der Mehrzahl von Zuführeinrichtungen zu dem wenigstens einen Entladebereich (EB) der Gruppiervorrichtung (100) zu bewegen.

2. Gruppierungsvorrichtung nach Anspruch 1, (112, 114, 116, 118) **dadurch gekennzeichnet, dass** die Steuervorrichtung (108) dazu ausgebildet und bestimmt ist, die Mover (106) längs kreuzungsfreier Bewegungspfade (PF5, PF6, PF7, PF8) von dem wenigstens einen Entladebereich (EB) der Gruppiervorrichtung (100) zu den Beladepositionen (BP1, BP2, BP3, BP4) der Mehrzahl von Zuführeinrichtungen (112, 114, 116, 118) zurückzubewegen.

3. Gruppierungsvorrichtung nach Anspruch 2,
**dadurch gekennzeichnet, dass** die Gruppier-Bewegungspfade (PF1, PF2, PF3, PF4) vollständig innerhalb der Rückführ-Bewegungspfade (PF5, PF6, PF7, PF8) verlaufen.

4. Gruppierungsvorrichtung nach einem der Ansprüche 1 bis 3,
**dadurch gekennzeichnet, dass** die Beladeposition (BP1, BP2, BP3, BP4) wenigstens einer Zuführeinrichtung (112, 114, 116, 118), vorzugsweise die Beladepositionen einer Mehrzahl von Zuführeinrichtungen, noch bevorzugter die Beladepositionen aller Zuführeinrichtungen, vom Rand (104a) der Arbeitsfläche (104) der in Magnetschwebetechnologie ausgebildeten Fördervorrichtung (102) einen Abstand aufweisen, der größer ist als die Abmessungen eines Movers (106).

5. Gruppierungsvorrichtung nach einem der Ansprüche 1 bis 4,
**dadurch gekennzeichnet, dass** auf wenigstens einem Mover (106), vorzugsweise auf einer Mehrzahl von Movern, noch bevorzugter auf allen Movern, eine Aufnahme (110) zum Aufnehmen des wenigstens einen Objekts (O) angebracht ist.

6. Gruppierungsvorrichtung nach einem der Ansprüche 1 bis 5,
**dadurch gekennzeichnet, dass** jeder Gruppier-Bewegungspfad (PF1, PF2, PF3, PF4) und/oder jeder Rückführ-Bewegungspfad (PF5, PF6, PF7, PF8) wenigstens eine Drehposition (DP1, DP2, DP3, DP4) aufweist.

7. Gruppierungsvorrichtung nach einem der Ansprüche 1 bis 6,
**dadurch gekennzeichnet, dass** die Steuervorrichtung (108) dazu ausgebildet und bestimmt ist, einen an einer Beladeposition (BP1, BP2, BP3, BP4) beladenen und somit von der Beladeposition (BP1, BP2, BP3, BP4) weg zu bewegenden Mover (106) und einen unbeladenen, in die Beladeposition (BP1, BP2, BP3, BP4) nachzurückenden Mover (106) zumindest über eine Distanz, die gleich der Länge der Mover (106) oder der Aufnahme (110) ist, in der gleichen Richtung zu bewegen.

8. Gruppierungsvorrichtung nach Anspruch 7,
**dadurch gekennzeichnet, dass** die Steuervorrichtung (108) dazu ausgebildet und bestimmt ist, den nachrückenden Mover (106) bereits während des Beladens des gerade zu beladenden Movers (106), vorzugsweise synchron zu diesem, mit diesem mitzubewegen.

9. Gruppierungsvorrichtung nach einem der Ansprüche 1 bis 8,
**dadurch gekennzeichnet, dass** die Steuervorrichtung (108) dazu ausgebildet und bestimmt ist, den gerade zu beladenden Mover (106) in der Beladeposition (BP1, BP2, BP3, BP4) um ein ganzzahligen Vielfaches von 90°, beispielsweise 180°, zu drehen.

10. Gruppierungsvorrichtung nach einem der Ansprüche 1 bis 9,
**dadurch gekennzeichnet, dass** die Steuervorrichtung (108) dazu ausgebildet und bestimmt ist, einen zu beladenden Mover (106) von der einer ersten Zuführeinrichtung (112, 114, 116, 118) zugeordneten Beladeposition (BP1, BP2, BP3, BP4) in eine einerzweiten Zuführeinrichtung (112, 114, 116, 118) zugeordnete Beladeposition (BP1, BP2, BP3, BP4) zu bewegen.

11. Gruppierungsvorrichtung nach einem der Ansprüche 1 bis 10,
**dadurch gekennzeichnet, dass** die Steuervorrichtung (108) dazu ausgebildet und bestimmt ist, den wenigstens einen zu entladenden Mover (106) in der für die Entladung erforderlichen Orientierung in einen dem jeweiligen Entladebereich (EB) vorgeordneten Aufstellbereich (AB) zu bewegen.

12. Gruppierungsvorrichtung nach einem der Ansprüche 1 bis 11,
**dadurch gekennzeichnet, dass** wenigstens einer Zuführeinrichtung (112, 114, 116, 118) und/oder wenigstens einem Entladebereich (EB) ein Pufferbereich (BPB1, BPB2, BPB3, BPB4, RPB1/2, RPB3/4) zur vorübergehenden Lagerung wenigstens zweier Mover (106) vorgeordnet ist.

13. Gruppierungsvorrichtung nach einem der Ansprüche 1 bis 12,
**dadurch gekennzeichnet, dass** die Steuervorrichtung (108) dazu ausgebildet und bestimmt ist, sämtliche Mover (106) in vordefinierte Ausgangspositionen zu bewegen.

14. Gruppierungsvorrichtung nach Anspruch 13,
**dadurch gekennzeichnet, dass** die Ausgangspositionen derart gewählt sind, dass die Mover (106) einen Abstand voneinander aufweisen, der ein Drehen jedes der Mover (106), gegebenenfalls einschließlich der Aufnahme (110), ermöglicht.

15. Gruppierungsvorrichtung nach einem der Ansprüche 1 bis 14,
**dadurch gekennzeichnet, dass** die Steuervorrichtung (108) dazu ausgebildet und bestimmt ist, wenigstens die beladenen Mover (106) in vordefinierte Entstörpositionen zu bewegen.
